# EUROPÄISCHE PATENTANMELDUNG

(11) **EP 1 909 472 A1**
(43) Veröffentlichungstag der Anmeldung: **09.04.2008**
(21) Anmeldenummer: 07019124.2
(22) Anmeldetag: 28.09.2007
(51) Int. Cl.: H04M 3/493

(54) **Kontextsensitive Kommunikationsfunktion**

(30) Priorität: 07.10.2006 DE 102006047464
(71) Anmelder: Deutsche Telekom AG, 53113 Bonn (DE)
(72) Erfinder: Brackmann, Ludwig, 53225 Bonn (DE)
(74) Vertreter: Braun-Dullaeus, Karl-Ulrich

(57) **Zusammenfassung**

Verfahren zur automatischen Darbietung von Information während eines Telefongespräches zwischen zwei Gesprächspartnern einer Telefonverbindung,
wobei ein mit Parametern der Telefonverbindung oder ein mit dem Inhalt des Telefongespräches in Zusammenhang stehender Suchbegriff generiert wird,
wobei aus einem oder mehreren Suchbegriffen eine Suchanfrage zur Übergabe an eine Suchfunktion erzeugt wird, die damit einen Datenbestand durchsucht,
wobei als Suchergebnis eine Information zurückgegeben wird und
wobei die Information im Rahmen des Telefongespräches zumindest einem der Gesprächspartner dargeboten wird.

## Beschreibung

Die Erfindung betrifft ein Verfahren zur automatischen Darbietung von Information während eines Telefongespräches, das bei einer Telefonverbindung zwischen zwei Partnern geführt wird.

Jedermann kennt das Problem, dass sich innerhalb eines Telefonates für einen oder beide Gesprächspartner das Problem stellt, schnell an eine Information, wie beispielsweise eine Telefonnummer eines Dritten, zu gelangen, um diese zu kommunizieren. In Fällen ähnlich der fehlenden Telefonnummer wird das Problem meist dadurch gelöst, dass einer der Gesprächspartner in den für ihn gerade verfügbaren schriftlichen Notizen nachsieht. Allerdings müssen diese Notizen tatsächlich für ihn verfügbar sein, wobei der Informationsgehalt der Notizen meist nicht über ein paar Fakten hinaus geht und keine weiter gehenden Fragen beantwortet.

Aus dem DE 199 54 859 C2 ist ein Intemet-Telefonie-Verfahren bekannt, bei dem in Abhängigkeit hinterlegter Teilnehmer-Profildaten den Teilnehmern während der Verbindung Informationsdaten über Produkte, Ereignisse und ähnliches auf dem Bildschirm ausgegeben werden. Dabei werden diese ausgegebenen Daten zusätzlich angereichert um Informationsdaten, die in Abhängigkeit ausgewerteter Sprachdaten generiert werden.

Die Aufgabe der vorliegenden Erfindung liegt nunmehr darin, für den oder die Gesprächspartner einer Telefonverbindung aktuell interessante Information, die unabhängig von Profildaten ist, mit einfachen Mitteln schnell und bequem verfügbar zu machen und darzubieten. Die Aufgabe der Erfindung liegt auch darin, ein System zur Umsetzung des Verfahrens zu schaffen.

Diese Aufgaben werden durch das Verfahren mit den Merkmalen des Anspruch 1 und das System nach Anspruch 10 gelöst. Vorteilhafte Ausführungsformen der Erfindung sind in den jeweiligen Unteransprüchen genannt.

Der Grundgedanke der Erfindung liegt darin, im Rahmen der Telefonverbindung eine Suchanfrage enthaltend einen oder mehrere Suchbegriffe zu generieren, mit dieser in einem verfügbaren Datenbestand zu suchen und das Ergebnis der Suche zumindest einem der Gesprächspartner darzubieten. Dabei ist das Merkmal "Suchbegrif" nicht auf eine Begrifflichkeit reduziert, sondern wird auch beispielsweise für Zahlen, wie Netzkennungen oder ähnliches, genutzt. Die Telefonverbindung kann entweder eine Verbindung über ein Festnetz oder über ein Mobilfunknetz sein, wobei es vorteilhaft ist, über das Netz einen möglichst unmittelbaren Zugang zum Internet zu haben. Für die Generierung des Suchbegriffes sind zwei unterschiedliche Möglichkeiten denkbar:

Zum einen kann die Suchanfrage Suchbegriffe umfassen, die sich aus Parametern der Telefonverbindung automatisch ergeben. Solche Parameter sind beispielsweise der Aufenthaltsort, an dem sich einer der Verbindungspartner oder an dem sich der Anschluss des Anrufers oder des Angerufenen befindet. So ist gerade ein solcher Aufenthaltsort interessant, da sich aus ihm eine Reihe anderer Informationen, wie das aktuelle Umfeld oder auch der Sozialstatus, ableiten lassen. Die Aufenthaltsorte mobil telefonierender Verbindungspartner können über die Funkzellen ermittelt werden, in denen sich die Verbindungspartner befinden. Es sind aber auch Mobiltelefone mit GPS Funktionalität bekannt, die genaue Ortskoordinaten als Suchbegriff übergeben können. Im Falle einer Beteiligung eines Festnetzanschlusses steht nicht nur die Vorwahl zur Verfügung, es kann auch auf umfangreiche Datenbanken zurückgegriffen werden, in denen die Position eines Anschlusses mit GPS Genauigkeit vermerkt ist. So sind beisielsweise bei den Netzbetreibern Datenbanken vorhanden, aus denen sich über die Anschlusskennung die Postadresse ermitteln lässt. Mit der Postadresse lassen sich wiederum Datenbanken durchsuchen, die Hintergrundinformation beispielsweise zur Art der zu der Adresse gehörigen Immobilie und/oder dem sozialen Umfeld enthalten. Aus diesen Hintergrundinformationen können sich Suchbegriffe ergeben, die in die Suchanfrage aufgenommen werden. Auch aus den Parametern der Dauer und/oder des Zeitpunktes der Verbindung können eine Vielzahl von Informationen abgeleitet werden. Zudem kann beispielsweise über Telefonbucheinträge aus öffentlichen oder nicht öffentlichen, z.B. im Telefon gespeicherten, Telefonbüchern, die Identität des oder der Teilnehmer ermittelt werden. Über die Suchfunktion kann dann Information zu den Teilnehmern ermittelt werden.

Zum anderen kann ein Suchbegriff insofern mit dem Inhalt des Telefongespräches in Zusammenhang stehen, als er sich aus der aktuellen Gesprächsthematik oder sogar aus einer geäußerten Körper- oder Gefühlsregung eines der Gesprächspartner ergibt. Auch solche Äußerungen sollen unter das Merkmal "im Zusammenhang mit dem Telefongespräch" gesehen werden. In diesem Fall kann ein Suchbegriff entweder automatisch per Analysefunktion aus dem Gespräch herausgefiltert werden. Andererseits ist es auch möglich, dass der Suchbegriff von einem der Gesprächspartner während des Telefonates aktiv und mittels eines Sprach- oder eines Tastaturbefehls vorgegeben wird.

Die so generierte aus Suchbegriffen zusammengesetzte Suchanfrage wird dann einer Suchfunktion übergeben, die damit einen insofern über das Endgerät zugänglichen Datenbestand durchsucht, als dass Daten aus dem Datenbestand zum Endgerät übermittelt werden können. Die Generierung der Suchbegriffe muss nicht auf dem Endgerät geschehen. Sie wird im Falle der "normalen" Telefonie vorteilhafterweise von einem über das Netz erreichbaren Rechner bewerkstelligt. Im Falle der lnternettelefonie, wo als Endgeräte leistungsstarke Computer herhalten, können Suchbegriffe unmittelbar im Computer generiert und als Suchanfrage an eine parallel oder im Netz laufende Suchmaschine übergeben werden. Dabei kann der Datenbestand in einer zentral über das Netz zugänglichen Datenbank, beispielsweise dem WWW, oder in einer nur für das jeweilige Endgerät dezentral zugänglichen Datenbank, beispielsweise einem Telefonbuch, liegen.

Wie insbesondere von Internet-Suchfunktionen (Suchmaschinen) bekannt ist, wird als Suchergebnis eine verwertbare Information zurückgegeben, die ihrerseits aus einem Hinweis auf eine Informationsquelle enthaltend tiefergehende Hintergrundinformation bestehen kann, wobei in diesem Fall die erste Information auch schon Rückschlüsse auf die Hintergrundinformation zulässt. Die gefundene Information respektiver der Hinweis auf die Informationsquelle wird im Rahmen des Telefongespräches zumindest einem der Verbindungspartner dargeboten.

Der besondere Vorteil des erfindungsgemäßen Vorgehens liegt darin, dass die ausgegebenen Informationen die Verbindungspartner aktuell interessieren und unabhängig von einem hinterlegten Teilnehmerprofil sind. Die erfindungsgemäße Generierung von Suchbegriffen und deren Übergabe an eine oder mehrere zugängliche Datenbanken bietet eine hohe Flexibilität des Verfahrens.

Die zurückgegebene Information kann auch in der Darbietung einer weiteren Möglichkeit der Kommunikation liegen. So kann beispielsweise unmittelbar eine Verbindung zu einem Dritten hergestellt werden, wenn einer der Teilnehmer einen diesbezüglichen Wunsch äußert. Ein solcher Wunsch könnte beispielsweise in dem Sprachbefehl "Konferenz zu Herrn Müller" liegen. Damit würde automatisch eine Konferenzschaltung aufgebaut, wobei die zur Kommunikation nötigen Daten aus einer internen oder aus einer zentral zugänglichen Datenbank entnommen werden.

Mit der Erfindung, die auch von einem einfachen Telefon realisiert werden kann, lassen sich verschiedene für den Telefonnutzer attraktive Funktionalitäten schaffen. In einem besonders einfachen Fall greift die im Endgerät realisierte Funktion auf den Datenbestand des internen Telefon- oder Adressbuches zu und gibt die darin enthaltenen Daten, wie insbesondere die Telefonnummer, eines nachgefragten Teilnehmers aus. Der Name des nachgefragten Teilnehmers kann vorher per Sprachbefehl vorgegeben werden, nachdem die Funktion per Sprach- oder Tastenbefehl aktiviert wurde. Damit ist das bekannte Problem behoben, dass einer der Gesprächspartner dem anderen eine Telefonnummer mitteilen möchte, dies aber nicht kann, da er erst in seinem elektronischen Telefonbuch nachsehen müsste, was wiederum nicht geht, ohne die Verbindung zu unterbrechen. So kann er nunmehr bei Bedarf während des Gespräches eine Taste drücken und der damit aktivierten Funktion den Namen des gewünschten Teilnehmers vorgeben. Die Suchfunktion geht damit in den Datenbestand und gibt als Ergebnis die Daten per Ansage und/oder per Textnachricht, beispielsweise im Format einer SMS, an einen oder an beide Gesprächspartner aus. Schon in dieser einfache Ausführung hat die Erfindung ersichtliche Vorteile.

Wie schon angedeutet, gibt es zwei verschiedene Arten, den Suchbegriff zu ermitteln, wobei sich diese Arten auch kombinieren lassen. In einer ersten Form ergibt er sich automatisch aus Parametern der Telefonverbindung. Als solche Parameter kommen, wie schon dargelegt, verschiedene in Betracht. Zu nennen sind beispielsweise die Netzkenriungen der Teilnehmer, aus denen sich zunächst deren Aufenthaltsort ergibt. Zu den ermittelten Aufenthaltsorten kann eine ganz allgemeine Information in Form einer Werbebotschaft angeboten werden. So kann bei der beiderseitigen Vorwahl "0228" und des abendlichen Zeitpunktes des Gespräches die Anzeige eines Restaurants in der Bonner Innenstadt mit Telefonnummer zur direkten Verbindung angezeigt werden. Eine solche Anzeige wäre natürlich besonders erfolgreich, wenn die Suche auch noch mit einem sich aus dem Inhalt des Gespräches ergebenden Suchbegriffes, beispielsweise mit "essen gehen", kombiniert würde. Wenn ein Teilnehmer unter seiner Vorwahl "0211" aus Düsseldorf in München unter "089" anruft, könnte er die Anzeige einer Fluggesellschaft, die Flüge auf dieser Linie anbietet, und einer Hotelkette, die vorort präsent ist, angezeigt bekommen. Hinter den Anzeigen können sich auch Links verbergen, die direkt zu den Anbietern führen und eine sofortige Reservierung möglich machen. In einer anderen Ausführungsform könnte im Fall einer Verbindung ins Ausland ein Dolmetscherdienst angeboten werden. Als Parameter der Telefonverbindung können neben dem Zeitpunkt auch die Dauer der momentanen Verbindung oder frühere Kontakte über diese Verbindung herhalten. Aus diesen Parametern lassen sich Rückschlüsse auf den momentanen Informationsbedarf der Gesprächspartner ableiten.

In einer anderen bevorzugten Ausführungsform wird ein Suchbegriff von einem der Verbindungspartner über ein Eingabemittel, insbesondere über das Mikrofon seines Endgerätes oder über dessen Tastatur, vorgegeben. Diese Vorgabe kann bewusst in Form einer zielgerichteten Angabe oder unbewusst geschehen. Bei der unbewussten Vorgabe wird der Suchbegriff von einer Analysefunktion automatisch aus dem Gespräch zwischen den Verbindungspartnern, insbesondere aus den gesprochenen Worten oder aus im Gespräch geäußerten Verhaltensmerkmalen der Verbindungspartner, generiert. In diesem Fall schaltet sich die Analysefunktion unmittelbar mit der Aufnahme der Verbindung ein, wobei es vorteilhaft ist, wenn die Suche während des Gesprächs ständig mit neuen Suchbegriffen wiederholt wird, so dass das dargebotene Ergebnis entsprechend aktuell ist. Während des Telefongespräches wechseln die präsentierten Hinweise damit je nach Inhalt des Gespräches. Im Fall der zielgerichteten Angabe ist es vorteilhaft, wenn der Gesprächspartner als Nutzer die Funktion beispielsweise durch Knopfdruck aktiviert und den Suchbegriff dann eingibt.

Auch wenn sich die Erfindung in der "herkömmlichen" Telefonie umsetzen lässt, so zeigt sie doch im Rahmen der neuerlich möglichen Internettelefonie erst ihre besondere Vielseitigkeit. Das liegt vor allem auch daran, dass damit der ganze Datenbestand der über das World Wide Web erreichbaren Webseiten zur Verfügung steht und sich auf technisch einfach umsetzbare Weise durchsuchen lässt. Zudem bieten die für Zwecke des "Voice over IP" geeigneten Endgeräte eine Reihe von Möglichkeiten, wie sie von den auch für diese Zwecke einzusetzenden Computern bekannt sind. Dazu zählten neben dem großen Arbeitsspeicher auch der große Bildschirm, auf dem sich Werbebanner als Suchergebnisse besonders wirksam darstellen lassen, und die komfortable Bedienung, die die Programme (Clients) bieten.

Als solcher Client sei beispielsweise "Skype" als besonders weit entwickelter Client genannt, der über eine Vielzahl wesentlicher Grundfunktionen für die Sprach- und Videokommunikation sowie das "Instant Messaging" verfügt. Solche Voice over IP Clients zeichnen sich auch durch die bequem zu handhabende graphische Benutzeroberfläche aus und können jederzeit über das Internet durch das Herunterladen von Updates aktualisiert werden. Damit lassen sich die Funktionen der Bedienoberfläche von einer Sekunde zur nächsten anpassen.

Überhaupt bietet das Internet als immer noch stark expandierendes Medium die Möglichkeit, sich aus einem großen Bestand von Anwenderprogrammen bedienen zu können. Insbesondere ist es vorteilhaft, sich zur Realisierung der Suchfunktion einer herkömmlichen Suchmaschine zu bedienen, die mit dem Suchbegriff das World Wide Web durchsucht und mit etwas "Begleitinformation" versehene Links zurückgibt. Allerdings ist es vorteilhaft, wenn diese Begleitinformation aus den Inhalten der sich hinter den Links verbergenden Webseiten herauszudestillieren. In einem einfachen Fall kann mit dem Hinweis auf eine Hintergrundinformation, insbesondere mit dem Link, ein Fragment einer Webseite angezeigt werden, in dem eine Art der Zusammenfassung zu vermuten ist. Dabei ist es vorteilhaft, wenn die Darbietung der Information als Präsentation eines Hinweises, insbesondere in Form einer Werbebotschaft, geschieht.

Solche Werbebotschaften können auf dem Bildschirm angezeigt oder auch als Sprachansage in geeigneter Form während des Telefongespräches, insbesondere in einer belanglosen Phase oder in einer Pause, dargeboten werden.

Ganz generell kann der Werbeplatz im Medium der Telefonie wie von Internet-Portalen bekannt an Kunden verkauft werden. Die Abrechnung kann, wie ebenfalls bekannt, "pro Klick" erfolgen. Damit kann ein besonders attraktives Geschäftsfeld erschlossen werden. In einer besonders zu bevorzugenden Ausführungsform baut ein Betreiber, insbesondere der Anbieter der Voice over IP Systems, eine Art von "Affiliate"-System auf, dem eine Vielzahl von Partnern angeschlossen sind. Die Suche erfolgt dann innerhalb des Angebotes der Partner, die ihrerseits besondere Werbebanner mit aussagekräftiger Information schaffen können. Bei Vorgabe entsprechender Suchkriterien werden diese Werbebanner angezeigt. Bei einem Klick auf das Banner eines Partners wird der Inhalt der dem Partner zugeordneten Daten, insbesondere sein Angebot, dargeboten, insbesondere auf dem Bildschirm angezeigt. Zudem kann für Bestellungen direkt zu dem Partner verbunden werden, wobei die Verbindung per Daten und/oder Sprachübertragung erfofgen kann.

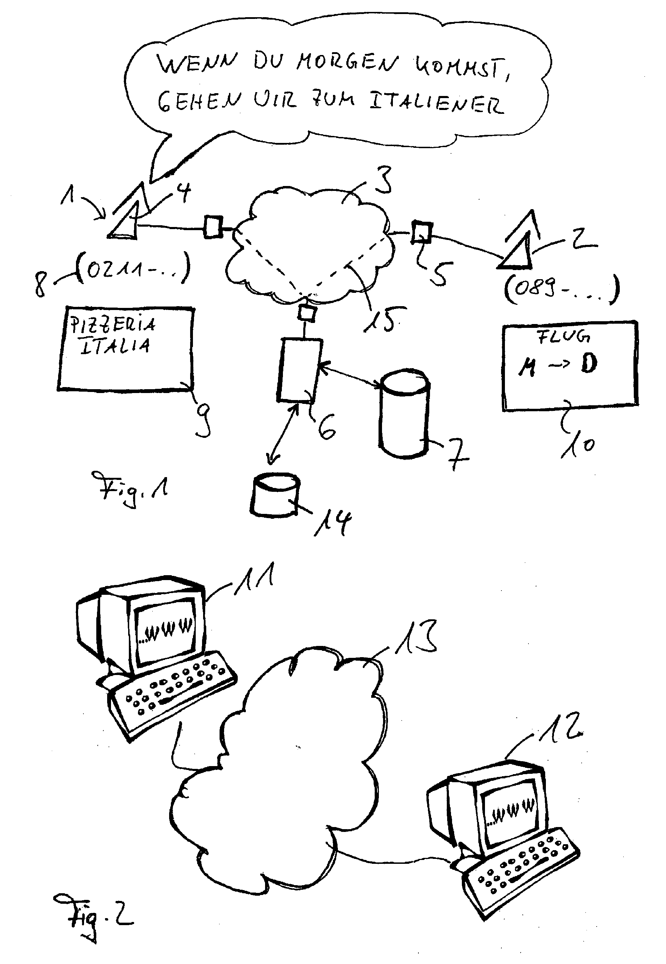

Nachfolgend werden zwei besondere Ausgestaltungen der Erfindung anhand der Figuren 1 und 2 beschrieben. Es zeigen:
- **Figur 1:**: ein "normales" Telefonnetz zur Umsetzung des erfindungsgemäßen Verfahrens und
- **Figur 2:**: ein System umfassend das Internet.

In Figur 1 ist schematisch eine typische Situation dargestellt, in der ein Teilnehmer 1 aus Düsseldorf mit einem Teilnehmer 2 aus München über ein Telefonnetz 3 telefoniert. Die jeweiligen Endgeräte 4 sind über Vermittlungsstellen 5 mit dem Telefonnetz 3 verbunden. Die Verbindung 15 ist über einen Server 6 geschleift, der Zugang zu zwei Datenbanken 7 und 14 hat.

Mit den Ortskennungen 8 der Teilnehmer ist der Server 6 über die Standorte der Teilnehmer 1 und 2 nämlich München und Düsseldorf informiert. Während des Gespräches äußert der Teilnehmer 1: "Wenn Du morgen kommst, gehen wir zum Italiener". Dieser Satz wird von einem im Server 6 laufenden Analysemodul registriert und ausgewertet. Das Analysemodul erkennt zunächst, dass der Satz vom Düsseldorfer Teilnehmer 1 geäußert wurde. Es analysiert, dass Teilnehmer B morgen von München nach Düsseldorf gelangen muss und dass beide dann zum Italiener essen gehen wollen. Es greift also auf die Datenbank 7 zu und gelangt zu einer Flugbörse, die Flüge für diese Strecke anbietet. Dem Server 6 ist es auch möglich, zunächst auf eine Datenbank 14 zuzugreifen, um beispielseise aus der Information über einen Aufenthaltsort weitere Hintergrundinformationen zu dem sozialen Umfeld zu besorgen. Aus den Hintergrundinformationen können Suchbegriffe abgeleitet werden, mit denen dann die Suchanfrage für die Datenbank 7 erzeugt wird. Das Ergebnis wird dem Teilnehmer 2 auf dem Display 9 seines Endgerätes präsentiert. Der Teilnehmer 1 bekommt hingegen Informationen auf seinem Display 10 zu italienischen Restaurants in seiner Nähe.

Figur 2 zeigt hingegen zwei Teilnehmer, die jeweils mit einem Computer 11 und 12 an das Internet 13 angeschlossen sind. Auf den Computern 11 und 12 laufen Programme, die eine Internettelefonie per "Voice over IP" ermöglichen. Die Standorte der Computer 11 und 12 lassen sich anhand der Netzverbindungsdatenlokalisieren.

Wenn nun der Teilnehmer 11 den oben genannten Satz äußert, so analysieren auf den Computern 11 und 12 laufende Analysefunktionen den Inhalt und übergeben einer jeweils auch auf den Computern 11 und 12 laufenden Suchmaschine die Suchwörter, in diesem Falle beispielsweise einerseits "Düsseldorf" "essen gehen" und "Italiener" und andererseits "Reise" und München Düsseldorf". Die Suchfunktionen zeigen die Ergebnisse auf den jeweiligen Bildschirmen der Computer 11 und 12 an.

Auf die erfindungsgemäße Weise könne dem Nutzer nützliche Informationen zu bestimmten Orten ausgegeben werden, die auf der Basis der Netzverbindungsinformation ermittelt wurden. In einer weiteren Ausführungsform kann aus der Netzverbindungsinformation gewonnene Ortsinformation für die Suche in anderen Datenbanken benutzt werden. Die an den Nutzer ausgegebene Information steht dann im Zusammenhang mit dem Umfeld, in dem er sich aufhält oder bewegt. Diese Ausführungsformen können mit der Möglichkeit kombiniert werden, Suchbegriffe aktiv einzugeben.

## Patentansprüche

1. Verfahren zur automatischen Darbietung von Information während eines Telefongespräches zwischen zwei Gesprächspartnern einer Telefonverbindung,
wobei ein mit Parametern der Telefonverbindung oder ein mit dem Inhalt des Telefongespräches in Zusammenhang stehender Suchbegriff generiert wird,
wobei aus einem oder mehreren Suchbegriffen eine Suchanfrage zur Übergabe an eine Suchfunktion erzeugt wird, die damit einen Datenbestand durchsucht,
wobei als Suchergebnis eine Information zurückgegeben wird und
wobei die Information im Rahmen des Telefongespräches zumindest einem der Gesprächspartner dargeboten wird.

2. Verfahren nach Anspruch 1,
**dadurch gekennzeichnet,**
**dass** als Information ein Hinweis auf eine Informationsquelle enthaltend weitere Hintergrundinformation, insbesondere einen Link zu einer weiteren Datenquelle, zurückgegeben wird, wobei die angezeigte Information Rückschlüsse auf die Hintergrundinformation zulässt.

3. Verfahren nach Anspruch 1,
**dadurch gekennzeichnet,**
**dass** als Information eine insbesondere im Adressbuch des Endgerätes gespeicherte Teilnehmerinformation, insbesondere seine Telefonnummer, zurückgegeben wird und/oder dass als Information eine weitere Möglichkeit der Kommunikation angeboten wird.

4. Verfahren nach einem der vorherigen Ansprüche,
**dadurch gekennzeichnet,**
**dass** der Suchbegriff mit den Kommunikationsdaten, insbesondere mit den Anschlussdaten eines der Teilnehmer, insofern in Verbindung steht, als er sich direkt oder indirekt aus einer Information betreffend die Verbindung ergibt.

5. Verfahren nach einem der vorherigen Ansprüche,
**dadurch gekennzeichnet,**
**dass** der Suchbegriff von einem der Verbindungspartner über ein Eingabemittel, insbesondere über das Mikrofon oder die Tastatur seines Endgerätes, vorgegeben wird.

6. Verfahren nach einem der vorherigen Ansprüche,
**dadurch gekennzeichnet,**
**dass** der Suchbegriff von einer Analysefunktion automatisch aus dem Gespräch zwischen den Verbindungspartnern, insbesondere aus den gesprochenen Worten, generiert wird.

7. Verfahren nach einem der vorherigen Ansprüche,
**dadurch gekennzeichnet,**
**dass** der Datenbestand der über das World Wide Web erreichbaren Webseiten durchsucht wird, wobei als Suchfunktion insbesondere eine Suchmaschine genutzt wird.

8. Verfahren nach einem der vorherigen Ansprüche,
**dadurch gekennzeichnet,**
**dass** der als Suchergebnis zurückgegebene Hinweis auf eine Informationsquelle einen Link zu einer Webseite enthält, wobei der Hinweis insbesondere ein Fragment der Webseite, insbesondere eine Zusammenfassung des Inhalts einer Webseite, enthält.

9. Verfahren nach einem der vorherigen Ansprüche,
**dadurch gekennzeichnet,**
**dass** der oder die Gesprächspartner durch Eingabe eines Befehls, insbesondere durch Eingabe eines Tastatur- oder Sprachbefehls, mit der Informationsquelle verbunden werden.

10. System zur Umsetzung des Verfahrens nach einem der vorherigen Ansprüche 1 bis 9,
**gekennzeichnet durch**
zwei lokalisierbare Endgeräte zur Durchführung von Telefongesprächen mit jeweils einer Möglichkeit zur Darbietung von Information während eines Telefongespräches,
ein Netz zur Übermittlung von Telefongesprächen,
einem Modul zur Generierung eines Suchbegriffes aus Parametern der Telefonverbindung oder aus dem Inhalt des Telefongespräches,
eine Suchfunktion, die anhand des übergebenen Suchbegriffes einen Datenbestand durchsucht und das Suchergebnis zumindest einem Endgerät zur Darstellung übermittelt.
